# EUROPEAN PATENT SPECIFICATION

(11) **EP 3 860 344 B1**
(45) Date of publication and mention of the grant of the patent: **07.10.2026**
(21) Application number: 19868967.1
(22) Date of filing: 01.10.2019
(51) Int. Cl.: A01N 33/08, A01N 43/40, A01N 43/653, A01N 33/12, A01N 47/18, A01N 25/30, B27K 3/52, A01P 3/00, A01N 25/04

(54) **WOOD TREATMENT SOLUTIONS CONTAINING FUNGICIDES AND TERTIARY ALKANOLAMINES AND RELATED METHODS, WOOD PRODUCTS AND COMPOSITION FOR PROTECTION AGAINST FUNGAL ORGANISMS**
HOLZBEHANDLUNGSLÖSUNGEN MIT FUNGIZIDEN UND TERTIÄREN ALKANOLAMINEN UND ZUGEHÖRIGE VERFAHREN, HOLZPRODUKTE UND MITTEL ZUM SCHUTZ VOR PILZORGANISMEN
SOLUTIONS DE TRAITEMENT DU BOIS CONTENANT DES FONGICIDES ET DES ALCANOLAMINES TERTIAIRES ET PROCÉDÉS ASSOCIÉS, PRODUITS DE BOIS ET COMPOSITION POUR LA PROTECTION CONTRE DES ORGANISMES FONGIQUES

(30) Priority: 04.10.2018 US 201816151496
(43) Date of publication of application: 11.08.2021
(60) Divisional application: 26151580.3; 26165995.7 / 4 736 642
(73) Proprietor: KOP-COAT, INC., Pittsburgh, PA 15238 (US)
(72) Inventor: CLAWSON, JR., Ronald W., Trafford, Pennsylvania 15085 (US); CUTLER, Kenneth A., Pittsburgh, Pennsylvania 15237 (US); BOHN, Justin J., Pittsburgh, Pennsylvania 15217 (US)
(74) Representative: Hambleton, Bernadette Angelina
(86) International application number: PCT/US2019/053965
(87) International publication number: WO 2020/072426

(56) References cited:
- EP-A1- 1 025 967
- WO-A1-2016/201512
- US-A1- 2008 280 792
- US-A1- 2009 318 571
- US-A1- 2012 048 295
- US-A1- 2014 147 691
- US-A1- 2016 286 795
- US-B2- 7 896 960
- US-B2- 8 741 324

## Description

### BACKGROUND OF THE INVENTION

### 1. Field of the Invention

The present invention relates to synergistic wood treatment combinations of fungicides and tertiary alkanolamines as well as related methods, wood products and compositions to provide enhanced protection against fungal organisms. It also relates to such compositions and formulants containing unique combinations of inert co-formulants with biologically significant fungicides.

### 2. Description of the Prior Art

Wood is one of the best structural materials for the construction of buildings because of its strength, ease of processing and relatively low cost. However, wood and wood-based materials, including cellulosic composites and plastic-wood composites, are susceptible to attack from various fungal organisms. Fungal attack can result in cosmetic damage (stain, mold and mildew) and/or structural degradation (decay) to both solid wood and wood-based composites.

Mold organisms, in addition to altering the properties and marring the appearance of wood, can present a health hazard in indoor environments as certain mold spores have the potential to be human respiratory allergens.

Sapstain is a particular problem for freshly sawn green lumber. Although attack by sapstain fungi does not generally result in the reduction of strength properties, sapstain can seriously degrade the value of lumber by impairing its appearance.

Preservative chemicals have been used since antiquity to prevent the onset of mold, stain and decay to wood in service. In recent times, the use of some wood preserving chemicals has been restricted or curtailed due to concerns about their safety to humans and their effects on the environment. Cost effectiveness of preservative treatments is also a major consideration as wood ultimately competes with non-cellulosic construction materials including steel, plastic and concrete.

Mold, mildew, decay and rot have individually or in combination resulted in substantial destruction of wood and products made therefrom. Providing protection for wood against fungal attack has been an ongoing problem with many solutions having been suggested. See for example, U.S. Patent 7,056,919 and 4,950,685.

WO2016/201512 discloses a wood preservative formulation comprising a nonaqueous carrier, one or more preservative compounds, and one or more tertiary compounds as potentiator for the one or more preservative compounds. US2014/147691 discloses a wood preservative formulation for treating wood comprising: at least one biocidal metal compound, at least one preservative, one or more water-miscible co-solvents, wherein the preservative formulation has an uptake of less than 220L/m3 and achieves a substantial full sapwood penetration thereby facilitating maintenance of dimensional stability of the wood or other cellulosic materials being treated.

EP1025967 discloses a wood preservative based on boric acid, 2-4C alkanolamine (such as one or more primary, secondary and/or tertiary 2-4C alkanolamines), one or more quaternary ammonium compounds, thickeners and/or emulsifiers and water, and also contains a fungicide (0.01-1.5 wt. %).

Despite the numerous materials which have been employed in resisting undesired fungal organism attack on wood, there remains a very real and substantial need for improved fungicides which will provide enhanced protection for wood and wood products. The present invention provides synergistic formulations of fungicides which are employable with tertiary amino alcohols (tertiary alkanolamines) to provide a synergistic increase in efficacy against fungal organisms.

### SUMMARY OF THE INVENTION

The present invention provides a fungal organism controlling wood treatment solution comprising: a synergistic combination of a tertiary alkanolamine, at least one fungicide selected from the group consisting of: 3-iodoprop-2-yn-1-yl butylcarbamade (IPBC), propiconazole, and didecyl dimethylammonium bicarbonate/carbonate and a solvent, wherein said tertiary alkanolamine is selected from the group consisting of 2-(dimethylamino)-ethanol and 3-hydroxy-1- from methylpiperidine.

The disclosure also relates to a method of protecting wood against fungal organisms with said solution, and wood which has been treated with said solution.

The solution may contain coformulants which do not alter the performance of the basic technology. The solution may contain a surfactant which is preferably Nonylphenol ethoxylate. It may also contain as a solvent 1,4 butanediol characterized by the property of being water miscible.

The present invention provides a synergistic combination of materials which will effectively enhance the performance of fungicides. The invention provides such synergistic effects through a solution and related composition, methods and the wood products treated by the solution.

It is a further object of the present invention to provide such a solution, composition and method to provide through synergism enhanced resistance to fungal deterioration.

It is yet another object of the present invention to provide such a system which is economical to employ.

It is a further object of the present invention to provide such superior results as verified by K-200 Greenwood Biossay of combinations according to the invention.

It is yet another object of the present invention to produce wood which has been treated by the solution, compound or method of the present invention.

It is yet another object of the present invention to provide such a system which will produce improved efficacy as confirmed by extensive testing.

It is yet another object of the present invention to provide such a system which beneficially employs inert co-formulants with the other components of the invention.

These and other objects of the invention will be readily apparent from the description which follows.

### DESCRIPTION OF THE PREFERRED EMBODIMENTS

As employed herein, the term "wood-" means wood, wood-based materials, wood fiber materials, forest products, timber, lumber, engineered wood, millwork, joinery, wood laminates, laminated veneer lumber, plywood, laminated strand lumber, wood fiber composites, medium density fiberboard, particle board, hard board, oriented strand board, wood fiber resin composites, wood strand resin composites, wood particle resin composites and other wood and wood fiber-based materials and fabricated and semi-fabricated products made thereof.

As employed herein, the term "fungicide" means a material which kills or inhibits the growth of fungi, fungi spores, mold, mildew, decay, rot and sapstain.

As employed herein, the term "tertiary alkanolamines" means organic compounds that contain a hydroxyl group (-OH), also known as alcohol group and a tertiary substituted amino (-NR₂) group within the same molecule. As employed herein "tertiary alkanolamine" may be used interchangeably with "tertiary amino alcohols".

As employed herein, the term "DMAMP" means "2-dimethylamino-2-methyl-1-propanol.

As employed herein, the term "IBPC" means 3-iodoprop-2-yn-1-yl butylcarbamate.

Tertiary amino alcohols, or tertiary alkanolamines, are a class or organic compounds that contain a hydroxyl (-OH) group (*aka* alcohol group) and a tertiary substituted amino (-NR₂) group within the same molecule. Tertiary substituted amines contain only alkyl substituted alkyl, aryl groups were substituted aryl groups around the nitrogen atoms. This is to be contrasted with primary or secondary amine functionalities which do not contain any hydrogen or non-carbon based atoms connected to the central nitrogen atom. In addition, tertiary amino alcohols exhibit benign, inert behavior toward reactive functional groups or separate molecules when compared to primary and secondary amines. When in solution, a tertiary alkanolamine molecule with an active group would not undergo substitution or single displacement reactions and impact the original structure of the molecule. This is of consequence when it is considered that costly fungicides molecules with moderately reactive functional groups can undergo these substitutions or single displacement reactions. This provides for economic use of the present invention.

Certain materials which are inert to the synergistic combination of the components may be employed. A co-solvent dissolvable in water and helping to solubilize the fungicides and retain them in emulsion is 1,4 butanediol characterized by the property being water miscible. A surfactant such as nonylphenol ethoxylate may be employed.

References herein to % (m/m) will refer to weight percent based upon the entire weight of the solution.

When the tertiary alkanolamine is 2-(Dimethylamino)-ethanol, it is preferably present in the amount of 0.050 % (m/m) to 0.415 % (m/m) and has a pH of about 5.0 to 10.8 and preferably about 9.84 to 10.56. It will preferably have an efficacy score of at least 35 percent.

When the tertiary alkanolamine is 3-hydroxy-1-methylpiperidine, it will be present in the amount of about 0.092 % (m/m) to 10.000 % (m/m). The solution will have a pH of about 8.13 to 10.65. It will preferably have an efficacy score of at least 25.

The fungicides are selected from the group consisting of 3-iodoprop-2-yn-1-yl butylcarbamate (IPBC), propiconazole, and didecyl dimethylammonium bicarbonate/carbonate.

A reference composition NOT according to the present invention includes DMAMP present in the amount of about 0.050 % (m/m) to 10.000 % (m/m) with IPBC being present in the amount of about 340 to 680 ppm, propiconazole in the amount of about 160 to 340 ppm and a quaternary ammonium compound such as Didecyl Dimethyl Ammonium Carbonate and Didecyl Dimethyl Ammonium Bicarbonate which is sold under the trade designation Carboquat 250T in the amount of about 240 to 980 ppm.

In addition, materials which will beneficially contribute to the effectiveness of the solution and composition may be added among these are: a surfactant such as nonylphenol ethoxylate in the amount of about 5.00 % m/m to 25.00 % m/m.

A co-solvent in water based formulations may be 1,4 butanediol, which is preferably employed in the amount of 0.211 % m/m to 20.00 % m/m. The 3-iodoprop-2-yn-1-yl butylcarbamate may preferably be provided in the range of 0.069 % m/m to 10.00 % (m/m).

The co-solvents and surfactants help stabilize the solution at temperature extremes.

The disclosure also provides wood treated by the methods employed with the solutions of the invention herein. The solution may be applied to the surface of the wood by any conventional means such as spray flood, dip, submersion, deluge, brush or mechanical assisted impregnation using elevated pressure or vacuum to facilitate impregnation into the wood.

The invention further provides a composition employing the constituents used in making the solution. The solution is created by dissolving the composition in a suitable solvent which is preferably water and/or 1,4 butanediol or an organic solvent such as, for example, Dimethylsulfoxide, N-methylpyrrolidone, acetone, isopropanol, and monoethanolamine.

| (I) | | | | | | | |
|---|---|---|---|---|---|---|---|
| | **KKK** | **LLL** | **MMM** | **NNN** | **OOO** | **PPP** | |
| | % (m/m) | % (m/m) | % (m/m) | % (m/m) | % (m/m) | % (m/m) | |
| 2-Diemthylamino-2-methyll-propanol (CAS:7005 -47-2) | | | | | | | |
| 3- Hydroxy-1-methylpiperidine (CAS: 3554-74-3) | | 0.184% | 0.092% | 10.000% | 0.184% | | |
| 2-(Dimethylamino)-ethanol (CAS: 108-01 - 0) | | | | | | | |
| Water | 98.602% | 98.418% | 98.510% | 88.602% | 98.516% | 98.704% | |
| Nonylphenol Ethoxylate (CAS: 12708787-0) | 5.000% | 5.000% | 5.000% | 5.000% | 5.000% | 5.000% | |
| 1,4 butanediol (CAS: 110-63-4) | 1.300% | 1.300% | 1.300% | 1.300% | 1.300% | 1.200% | |
| 3-Iodoprop-2-yn-1-yl butylcarbamate (IPBC), (CAS: 55406 -53-6) | 0.098% | 0.098% | 0.098% | 0.098% | | | (A) |
| Propiconazole (CAS: 60207-90-1) | | | | | | 0.096% | |
| Didecyl Dimethylammonium Bicarbonate/Carbonate (CAS: Mixture) | | | | | | | |
| | | | | | | | |
| pH of Treating Solution | 7.26 | 10.04 | 9.56 | 10.65 | 10.16 | 9.84 | |
| % Efficacy Score (average of 10 samples). | 18% | 26% | 26% | 26% | 0% | 26% | |
| Untreated Efficacy Score (average of 10 samples) | 0% | 0% | 0% | 0% | 0% | 0% | |
| Treated Control Efficacy Score (avg of 10 samples) | 100% | 100% | 100% | 100% | 100% | 100% | |

| | (J) | | | | | | | | |
|---|---|---|---|---|---|---|---|---|---|
| | **QQO** | **RRR** | **SSS** | **TTT** | **UUU** | **VVV** | **WWW** | **XXX** | |
| | % (m/m) | % (m/m) | % (m/m) | % (m/m) | % (m/m) | % (m/m) | % (m/m) | % (m/m) | |
| | | | | | | | | | |
| | 0.184% | 0.184% | | 0.184% | 0.184% | | | | |
| | | | | | | | 0.050% | 0.184% | |
| | 98.520% | 98.616% | 98.541% | 98.357% | 98.516% | 93.347% | 93.297% | 93.163% | |
| | 5.000% | 5.000% | 5.000% | 5.000% | 5.000% | 5.000% | 5.000% | 5.000% | |
| (A) | 1.200% | 1.200% | 1.300% | 1.300% | 1.300% | 1.300% | 1.300% | 1.300% | (B) |
| | | | | | | 0.098% | 0.098% | 0.098% | |
| | 0.096% | | | | | 0.096% | 0.096% | 0.096% | |
| | | | 0.159% | 0.159% | | 0.159% | 0.159% | 0.159% | |
| | | | | | | | | | |
| | 9.60 | 10.08 | 8.13 | 9.27 | 9.80 | 7.26 | 9.84 | 10.08 | |
| | 28% | 0% | 10% | 15% | 0% | 31% | 35% | 48% | |
| | 0% | 0% | 0% | 0% | 0% | 0% | 0% | 0% | |
| | 100% | 100% | 100% | 100% | 100% | 100% | 100% | 100% | |

| | **Control** | **% (m/m)** | | | | |
|---|---|---|---|---|---|---|
| | **A % (m/m)** | **LLL** | **MMM** | **NNN** | **QQQ** | **TTT** |
| **2-Dimethylamino-s-methyl-1-propanol** (CAS: 7005-47-2) | 0.100% | | | | | |
| **3-Hyroxy-1-Methyl piperidine** (CAS: 7005-47-2) | | 0.184% | 0.092% | 10.000% | 0.184% | 0.184% |
| **2-(Dimethyl amino)-ethanol** (CAS: 108-01-0) | | | | | | |
| **Water** | 89.400% | 98.418% | 98.510% | 88.516% | 98.520% | 98.357% |
| **Nonylphenol Ethoxylate** (CAS:127087-87-0) | 5.000% | 5.000% | 5.000% | 5.000% | 5.000% | 5.000% |
| **1,4 butanediol** (CAS: 110-63-4) | 5.500% | 1.300% | 1.300% | 1.300% | 1.200% | 1.300% |
| **3-Iodoprop-2-yn-1-yl butylcarbamate (IPBC)** (CAS: 55406-53-6) | | 0.098% | 0.098% | 0.098% | | |
| **Propiconazole** (CAS: 60207-90-1) | | | | | 0.096% | |
| **Didecyl Dimethylammonium Bicarbonate/carbonate** | | | | | | 0.159% |
| | | | | | | |
| **pH of treating solution** | 8.5 | 10.4 | 9.56 | 10.65 | 9.60 | 9.27 |
| % **Efficacy Score** (average of 10 samples) | 0% | 26% | 26% | 26% | 28% | 15% |
| **Untreated Efficacy Scope** (average of 10 samples) | 0% | 0% | 0% | 0% | 0% | 0% |
| **Treated Control Efficacy Score** (average of 10 samples) | 100% | 100% | 100% | 100% | 100% | 100% |

| | **%(m/m)** | | |
|---|---|---|---|
| | **WWW** | **XXX** | **YYY** |
| **3-Hyroxy-1-Methyl piperidine** (CAS: 7005-47-2) | | | |
| **2-(Dimethyl amino)-ethanol** (CAS: 108-01-0) | 0.05% | 0.184% | 0.415% |
| **Water** | 93.297% | 93.163% | 93.032% |
| **Nonylphenol Ethoxylate** (CAS:127087-87-0) | 5.000% | 5.000% | 5.000% |
| **1,4 butanediol** (CAS: 110-63-4) | 1.300% | 1.300% | 1.200% |
| **3-Iodoprop-2-yn-1-yl butylcarbamate (IPBC)** (CAS: 55406-53-6) | 0.098% | 0.098% | 0.098% |
| **Propiconazole** (CAS: 60207-90-1) | 0.096% | 0.096% | 0.096% |
| **Didecyl Dimethylammonium Bicarbonate/carbonate** | 0.159% | 0.159% | 0.159& |
| | | | |
| **pH of treating solution** | 9.84 | 10.08 | 10.56 |
| **% Efficacy Score** (average of 10 samples) | 35% | 48% | 51% |
| **Untreated Efficacy Scope** (average of 10 samples) | 0% | 0% | 0% |
| **Treated Control Efficacy Score** (average of 10 samples) | 100% | 100% | 100% |

The following are examples of how the solutions employed in this testing were created. These letter designations with a solution correspond directly to a heading presented in the Table. The capital letter identification of each of the following solution preparation summaries corresponds to a column of the Table which bears the identical letter.

### Solution A

To a 500-mL beaker equipped with a magnetic stirrer, was added 5.000 g Nonyl Phenol Ethoxylate and 5.500 g 1,4 butanediol. The mixture was stirred while 0.100 g of 2-Dimethylamino-2-methyl-1-propanol was added. 89.400 g of water was slowly added and mixed for 5 min, forming a slightly yellow transparent solution.

### Solution LLL

To a 500-mL beaker equipped with a magnetic stirrer, was added 5.00 g Nonyl Phenol Ethoxylate and 1.30 g 1,4 butanediol. The mixture was stirred while 0.184 g of 3-Hydroxy-1-methylpiperidine was added. 0.098 g of 3-Iodoprop-2-yn-1-yl butylcarbamate (IPBC) was added and the solution was stirred for 5 min. 98.418 g of water was slowly added and mixed for 5 min, forming a slightly yellow transparent solution.

### Solution YYY

To a 500-mL beaker equipped with a magnetic stirrer, was added 5.00 g Nonyl Phenol Ethoxylate and 1.200 g 1,4 butanediol. The mixture was stirred while 0.415 g of 2-(Dimethylamino)-ethanol was added. 0.159 gram of Didecyl Dimethylammonium Bicarbonate/Carbonate was added and the solution stirred for 2 min. 0.098 g of 3-Iodoprop-2-yn-1-yl butylcarbamate (IPBC) was added and stirred until fully dissolved (2 min). 0.096 g of Propiconazole was added and stirred until fully dissolved (2 min). 99.032 g of water was slowly added and mixed for 5 min, forming a slightly yellow transparent solution.

In determining the percent efficacy score shown as the third from the bottom entry in the Table, the following Bioassay procedure was employed.

Readings were taken at a minimum every 7^{th} day to the end of the experiment (28 d). More frequent readings can be taken if the fungal organisms exhibit robust virality as witnessed on the untreated controls. Each treatment was run at 10x replication to ensure a statistically relevant sample set. Each separate assay plate containing one of the ten replicates exhibited sample position randomization to ensure there was no biasing due to proximity to another test article. Statistical % protection data was analyzed using standard outlier regression. No outliers were reported in the data sets contained in this report.

### K-200 Bioassay

A K-200 Greenwood Bioassay uses Red Pine (*Pinus resinosa*) discs as the wood species to be challenged against a complex inoculum of a multi-organism Deuteromycetes fungal blend. This experiment is performed in scientifically controlled high humidity and temperature regulated incubators. Periodic readings are carefully taken by a trained mycologist in proper biologically designed hoods to eliminate any chance of airborne contamination. Spore catch plates are utilized to ensure the individual experiments are not contaminated.

The Deuteromycetes fungal challenge blend includes, *Aspergillus niger* (ATCC *6275), Paecilomyces varioti* (16023), *Graphium rubrum* (6505), *Penicillium purpurogenum* (52427), *Diplodia gossypina* (9055), *Ceratocystisfimbriate* (14503), and *Ceratocystis clavigerum* (18086). This fungal blend is a mixture of Ascomycota and Basidiomycota rot (decay), mold, mildew, and stain organisms. Rot Fungi degrade only the cellulose and hemicellulose, and typically occur in wood of high water and nitrogen content. Molds are non-decaying wood fungi that inhabit on plant and animal matter, whereas mildew and stain organisms are more of a surface infestation and discoloration. Molds discolor the wood but they do not break down wood fibers and therefore do not weaken the wood structure. Additionally, molds, mildews, and stains can increase the capacity of the affected wood to absorb moisture creating an opening in the wood for wood decay fungi degradation.

### Treatment of Wood Articles

Each red pine disc was dipped for approximately 30 seconds in varied dilutions of test solutions and allowed to dry 24 hours. The positive control was a commercial sap stain and mold control containing Positive controls treated with Treated with a solution containing 0.46% Nonylphenol ethoxylate, 0.04% Diiodomethyl-p-tolylsulfone, 0.13% Propiconazole, and 0.13% IPBC. Untreated pine discs served as the negative control. Ten replicates were used for each test dilution. Evaluations were done for up to a maximum of 28 days incubation at controlled 30°C and 90% relative humidity.

### Quantification of Efficacy

Quantification of efficacy from the treatment solution is measured as a % Overall Protection of the Disc and is based on a visual assessment of the total surface area. As shown in the table below.

| **Overall Protection (%)** | **Deuteromycetes Growth** |
|---|---|
| 100% | No Deuteromycetes growth on red pine disc |
| Greater than 100% | Zone of Inhibition of Deuteromycetes growth around red pine disc. |
| Less than 100% | Indicates growth of Deuteromycetes on the red pine disc. (For example, 50% means half of the disc is covered in Deuteromycetes). |

The following discussion which has paragraphs identified by capital letters equivalent to column headings in the Table provides additional guidance as to the comparative test results. The following provides a column by column detailed analysis of the specific test and the related results as shown in the Table.
A. This is a control containing the DMAMP and all inert formulants showing there is no efficacy.
LLL. This is a IPBC (fungicide) containing formulation with the tertiary alkanolamine 3-hydroxy-1-methylpiperidine at 0.184%to be compared to MMM, NNN, and (KKK and OOO from the application as filed).
MMM. This is a IPBC (fungicide) containing formulation with the tertiary alkanolamine 3-hydroxy-1-methylpiperidine at 0.092% to be compared to LLL, NNN, and (KKK and OOO from the application as filed).
NNN. This is a IPBC (fungicide) containing formulation with the tertiary alkanolamine 3-hydroxy-1-methylpiperidine at 10.00%to be compared to LLL, MMM, and (KKK and OOO from the application as filed).
QQQ. This is a propiconazole (fungicide) containing formulation with the tertiary alkanolamine 3-hydroxy-1-methylpiperidine at 0.184% to be compared to PPP and RRR from the application as filed.
TTT. This is a didecyl diemethylammonium carbonate/bicarbonate (fungicide) containing formulation with the tertiary alkanolamine 3-hydroxy-1-methylpiperidine at 0.184% to be compared to SSS and UUU. This is meant to show other biocides with the alternative tertiary alkanolamines.
WWW. This is a IPBC, Propiconazole, and Didecyl diemthyl ammonium bicarbonate/carbonate containing formulation with the tertiary alkanolamine 2-(dimethylamino)-ethanol at 0.05% (lower limit).
XXX. This is a IPBC, Propiconazole, and Didecyl diemthyl ammonium bicarbonate/carbonate containing formulation with the tertiary alkanolamine 2-(dimethylamino)-ethanol at 0.184% (nominal limit).
YYY. This is a IPBC, Propiconazole, and Didecyl diemthyl ammonium bicarbonate/carbonate containing formulation with the tertiary alkanolamine 2-(dimethylamino)-ethanol at 0.415% (upper limit).

It will be appreciated, therefore, that the present invention has provided a synergistic combination of fungicides with tertiary alkanolamines to effectively control and destroy fungal organisms. The invention may advantageously be employed by providing a solution of the same associated methods, wood treated with the same and the related composition. In addition, certain inert coformulants may be employed in combination with the solution compositions.

## Claims

1. A fungal organism controlling wood treatment solution comprising:
a synergistic combination of a tertiary alkanolamine,
at least one fungicide selected from the group consisting of 3-iodoprop-2-yn-1-yl butylcarbamate (IPBC), propiconazole, and didecyl dimethylammonium bicarbonate/carbonate, and
a solvent,
wherein said tertiary alkanolamine is selected from the group consisting of 2-(dimethylamino)-ethanol and 3-hydroxy-1-methylpiperidine.

2. The solution of claim 1 including said solution containing a surfactant.

3. The solution of claim 2, wherein said surfactant is nonylphenol ethoxylate.

4. The solution of any one of claims 1 to 3 including said solution containing 1,4 butanediol.

5. The solution of any one of claims 1 to 4 including said tertiary alkanolamine being 2-(dimethylamino)-ethanol present in the amount of about 0.050 % (m/m).

6. The solution of claim 5 including said solution having an efficacy score of at least 35 percent, wherein the efficacy score is measured as a percentage of overall protection based on a visual assessment of total surface area.

7. The solution of any one of claims 1 to 4 including said tertiary alkanolamine being 3-hydroxy-1-methylpiperidine present in the amount of about 0.092 % (m/m) to 10.000 % (m/m).

8. A method of protecting wood against fungal organisms comprising providing a solution having a synergistic combination of a tertiary alkanolamine,
at least one fungicide selected from the group consisting of 3-iodoprop-2-yn-1-yl butylcarbamate (IPBC), propiconazole, and didecyl dimethylammonium bicarbonate/carbonate and a solvent, and
applying said solution to wood,
wherein said tertiary alkanolamine is selected from the group consisting of 2-(dimethylamino)-ethanol and 3-hydroxy-1-methylpiperidine.

9. The method of claim 8 including said solution containing a surfactant and 1,4 butanediol.

10. Treated wood comprising wood which has been treated by the solution of any one of claims 1 to 7.

11. A fungal organism controlling wood treatment concentrate composition comprising
a synergistic combination of a tertiary alkanolamine, and
at least one fungicide selected from the group consisting of 3-iodoprop-2-yn-1-yl butylcarbamate (IPBC), propiconazole, and didecyl dimethylammonium bicarbonate/carbonate,
said tertiary alkanolamine being 3-hydroxy-1-methylpiperidine.

12. The composition of claim 11 including said composition having a surfactant.

13. The composition of claim 12 including said surfactant being nonylphenol ethoxylate.

14. The composition of any one of claims 11 to 13 including said composition containing 1,4 butanediol.

## Patentansprüche

1. Pilzorganismus bekämpfende Holzbehandlungslösung, umfassend:
eine synergistische Kombination eines tertiären Alkanolamins, mindestens ein Fungizid, ausgewählt aus der Gruppe bestehend aus 3-Iodprop-2-in-1-yl-butylcarbamat (IPBC), Propiconazol und
Didecyldimethylammoniumbicarbonat/-carbonat, und
ein Lösungsmittel,
wobei das tertiäre Alkanolamin ausgewählt ist aus der Gruppe bestehend aus 2-(Dimethylamino)-ethanol und 3-Hydroxy-1-methylpiperidin.

2. Lösung nach Anspruch 1, einschließlich der Lösung, die ein Tensid enthält.

3. Lösung nach Anspruch 2, wobei das Tensid Nonylphenolethoxylat ist.

4. Lösung nach einem der Ansprüche 1 bis 3, einschließlich der Lösung, die 1,4-Butandiol enthält.

5. Lösung nach einem der Ansprüche 1 bis 4, einschließlich des tertiären Alkanolamins, das ein in der Menge zu etwa 0,050 % (m/m) vorliegendes 2-(Dimethylamino)-ethanol ist.

6. Lösung nach Anspruch 5, einschließlich der Lösung, die einen Wirksamkeitswert von mindestens 35 Prozent aufweist, wobei der Wirksamkeitswert als Prozentsatz des Gesamtschutzes basierend auf einer visuellen Beurteilung der gesamten Oberfläche gemessen wird.

7. Lösung nach einem der Ansprüche 1 bis 4, einschließlich des tertiären Alkanolamins, das ein in der Menge zu etwa 0,092 % (m/m) bis 10,000 % (m/m) vorliegendes 3-Hydroxy-1-methylpiperidin ist.

8. Verfahren zum Schützen von Holz gegen Pilzorganismen, umfassend das Bereitstellen einer Lösung mit einer synergistischen Kombination aus einem tertiären Alkanolamin,
mindestens einem Fungizid, ausgewählt aus der Gruppe bestehend aus 3-Iodprop-2-in-1-yl-butylcarbamat (IPBC), Propiconazol und Didecyldimethylammoniumbicarbonat/-carbonat, und einem Lösungsmittel, und
Aufbringen der Lösung auf Holz,
wobei das tertiäre Alkanolamin ausgewählt ist aus der Gruppe bestehend aus 2-(Dimethylamino)-ethanol und 3-Hydroxy-1-methylpiperidin.

9. Verfahren nach Anspruch 8, einschließlich der Lösung, die ein Tensid und 1,4-Butandiol enthält.

10. Behandeltes Holz, umfassend Holz, das mit der Lösung nach einem der Ansprüche 1 bis 7 behandelt worden ist.

11. Pilzorganismus bekämpfende
Holzbehandlungskonzentratzusammensetzung, umfassend eine synergistische Kombination eines tertiären Alkanolamins, und
mindestens ein Fungizid, ausgewählt aus der Gruppe bestehend aus 3-Iodprop-2-in-1-yl-butylcarbamat (IPBC), Propiconazol und Didecyldimethylammoniumbicarbonat/-carbonat,
wobei das tertiäre Alkanolamin 3-Hydroxy-1-methylpiperidin ist.

12. Zusammensetzung nach Anspruch 11, einschließlich der Zusammensetzung, die ein Tensid aufweist.

13. Zusammensetzung nach Anspruch 12, einschließlich des Tensids, das Nonylphenolethoxylat ist.

14. Zusammensetzung nach einem der Ansprüche 11 bis 13, einschließlich der Zusammensetzung, die 1,4-Butandiol enthält.

## Revendications

1. Organisme fongique commandant la solution de traitement de bois comprenant :
une combinaison synergique d'une alcanolamine tertiaire,
au moins un fongicide choisi dans le groupe constitué de 3-iodoprop-2-yn-1-ylcarbamate (IPBC), propiconazole, et didécyl diméthylammonium bicarbonate/carbonate, et
un solvant,
dans lequel ladite alcanolamine tertiaire est choisie dans le groupe constitué de 2-(diméthylamino)-éthanol et 3-hydroxy-1-méthylpipéridine.

2. Solution selon la revendication 1, comportant ladite solution contenant un agent tensioactif.

3. Solution selon la revendication 2, dans laquelle ledit agent tensioactif est le nonylphénol éthoxylate.

4. Solution selon l'une quelconque des revendications 1 à 3, comportant ladite solution contenant du 1,4-butanediol.

5. Solution selon l'une quelconque des revendications 1 à 4, comportant ladite alcanolamine tertiaire étant de la 2-(diméthylamino)-éthanol présente en quantité d'environ 0,050 % (m/m).

6. Solution selon la revendication 5, comportant ladite solution ayant un score d'efficacité d'au moins 35 pour cent, dans laquelle le score d'efficacité est mesuré en tant que pourcentage de protection globale sur la base d'une évaluation visuelle de la surface totale.

7. Solution selon l'une quelconque des revendications 1 à 4, comportant ladite alcanolamine tertiaire étant 3-hydroxy-1-méthylpipéridine présente en quantité d'environ 0,092 % (m/m) à 10 000 % (m/m).

8. Procédé de protection du bois contre des organismes fongiques comprenant la fourniture d'une solution ayant une combinaison synergique d'une alcanolamine tertiaire,
au moins un fongicide choisi dans le groupe constitué de 3-iodoprop-2-yn-1-ylcarbamate (IPBC), propiconazole et didécyl diméthylammonium bicarbonate/carbonate et un solvant, et
l'application de ladite solution au bois,
dans lequel ladite alcanolamine tertiaire est choisie dans le groupe constitué de 2-(diméthylamino)-éthanol et 3-hydroxy-1-méthylpipéridine.

9. Procédé selon la revendication 8, comportant ladite solution contenant un tensioactif et du 1,4-butanediol.

10. Bois traité comprenant du bois qui a été traité par la solution selon l'une quelconque des revendications 1 à 7.

11. Composition de concentré de traitement de bois de commande d'organisme fongique comprenant une combinaison synergique d'une alcanolamine tertiaire, et
au moins un fongicide choisi dans le groupe constitué de 3-iodoprop-2-yn-1-ylcarbamate (IPBC), propiconazole et didécyl diméthylammonium bicarbonate/carbonate,
ladite alcanolamine tertiaire étant 3-hydroxy-1-méthylpipéridine.

12. Composition selon la revendication 11, comportant ladite composition ayant un agent tensioactif.

13. Composition selon la revendication 12, comportant ledit agent tensioactif étant de l'éthoxylate de nonylphénol.

14. Composition selon l'une quelconque des revendications 11 à 13, comportant ladite composition contenant du 1,4-butanediol.
